# EUROPÄISCHE PATENTANMELDUNG

(11) **EP 0 992 727 A2**
(43) Veröffentlichungstag der Anmeldung: **12.04.2000**
(21) Anmeldenummer: 99119291.5
(22) Anmeldetag: 28.09.1999
(51) Int. Cl.: F16K 31/06

(54) **Ventilanordnung**

(30) Priorität: 07.10.1998 DE 19846226
(71) Anmelder: EMERSON ELECTRIC GmbH & Co., D-71332 Waiblingen (DE)
(72) Erfinder: Maurer, Rainer, 70176 Stuttgart (DE)
(74) Vertreter: Manitz, Finsterwald & Partner

(57) **Zusammenfassung**

Ventilanordnung, insbesondere als pulsbreitenmoduliertes Expansionventil einer Kälteanlage mit folgenden Elementen:
einem Ventilkörper (1) mit einer Durchgangsöäffnung (5), einem in ein Ende der Durchgangsöffnung (5) eingesetzten Ankerrohr (2), einem in dem Ankerrohr (2) hin- und herbeweglichen Anker (3), einem in das außenliegenden Ende des Ankerrohrs (2) eingesetzten festen Ankerkern (4), einem zwischen beweglichem Anker (3) und festem Ankerkern (4) wirksamen Rückstellelement (22), einem von dem beweglichen Anker (3) getragenen Schließelement (18), welches mit einer Durchtrittsöffnung (17) zum Öffnen und Schließen der Ventilanordnung zusammenwirkt sowie mit einer Magnetspule zur Betätigung der Ventilanordnung, wobei zwischen dem Ankerrohr (2) und dem beweglichen Anker (3) ein Ringraum (19) ausgebildet ist, dessen Öffnungsquerschnitt so bemessen ist, daß der zwischen beweglichem Anker (3) und festem Ankerkern (4) gebildete Raum (20) als Dämpfungskammer wirkt, durch welche die Öffnungs- und Schließbewegung des beweglichen Ankers (3) gedämpft wird. Die Ausbildung der Passungsdämpfung direkt zwischen Ankerrohr (2) und beweglichem Anker (3) ist herstellungstechnisch vorteilhaft.

## Beschreibung

Die vorliegende Erfindung betrifft eine Ventilanordnung, insbesondere für ein Expansionsventil einer Kälteanlage, dessen Kapazität durch Pulsbreitenmodulation bestimmt wird. Das heißt, innerhalb eines Zyklus von beispielsweise 6 Sekunden wird das Ventil, insbesondere elektromagnetisch, für einen bestimmten Bruchteil, beispielsweise 4 Sekunden, geöffnet und für den verbleibenden Bruchteil, also in diesem Beispiel 2 Sekunden, geschlossen. Das Verhältnis von Öffnungszeit zu Schließzeit bestimmt den Öffnungsgrad des Ventils und damit den Massenstrom durch das Ventil.

Derartige Ventile sind bereits bekannt und werden anstelle der üblichen thermostatischen Expansionsventile in Kältekreisen eingesetzt. Diese Ventile können dabei nicht nur als Expansionsventil, sondern auch als Schließventil dienen. Ein separates Schließventil ist somit nicht erforderlich.

Problematisch bei derartigen Ventilen ist aufgrund des häufigen Wechsels von Öffnungsstellung und Schließsteilung der sog. Wasserhammereffekt, also die sich beim schnellen Öffnen und/oder Schließen ergebenden Stoßwellen. Es ist daher auch bereits bekannt, eine Dämpfungseinrichtung vorzusehen. Hierzu ist der Raum zwischen beweglichem Ventilanker und feststehendem Ankerkern als Dämpfungsraum ausgebildet, indem der Raum zwischen beweglichem Ventilanker und diesen umgebendem Ankerrohr als Drosselkanal ausgebildet ist. Dabei wird in das Ankerrohr, welches üblicherweise aus Stahl gefertigt ist, eine paßgenau gefertigte Messinghülse eingesetzt, welche den beweglichen Anker in einem solchen Abstand umgibt, daß das Medium aus der Dämpfungskammer nur mit einer gewünschten Geschwindigkeit entweichen kann.

Erfindungsgemäß ist nun vorgesehen, anstelle einer Hülse das Ankerrohr selbst als Passungsrohr auszubilden, insbesondere indem in das Ankerrohr eine genau bearbeitete Bohrung eingebracht wird. Dabei ist das Ankerrohr aus einem geeigneten Material, beispielsweise Messing, gefertigt. In das Ankerrohr wird dann der Ankerkem aus Magneteisen eingesetzt und an diesem beispielsweise durch Hartlöten befestigt. Diese Ausgestaltung ist herstellungstechnisch vorteilhaft, da ein Messingdrehteil verwendet werden kann, während bei Verwendung einer Hülse zur Passungsdämpfung ein verhältnismäßig dünnes Rohr verwendet werden muß. Zudem muß dieses Rohr in das herkömmliche Ankerrohr eingesetzt werden, wozu das herkömmliche Ankerrohr mit ausreichender Maßgenauigkeit gefertigt werden muß und ein zusätzlicher Schritt bei der Herstellung erforderlich ist.

Vorteilhaft ist es des weiteren, wenn das Ankerrohr und bevorzugt auch der bewegliche Anker nur über einen Bereich ihrer Oberflächen auf Passung gefertigt sind. Dadurch kann mit geringem Aufwand eine ausreichende Passung zur Erzielung der gewünschten Dämpfung erreicht werden.

Des weiteren ist es vorteilhaft, wenn an das Ankerrohr Befestigungsmittel angeformt sind, durch welche das Ankerrohr mit dem Ventilgehäuse verbindbar ist. Insbesondere kann das Ankerrohr mit einem Außengewinde versehen sein. Damit wird ein separates Bauteil eingespart. Insgesamt ergibt sich damit eine Reduzierung der notwendigen Bauteile von vier auf zwei, nämlich anstelle eines Ankerrohres, eines Befestigungsmittels, wie Sechskantmutter, eines Ankerkerns und einer Passungsbuchse werden nun nur noch ein Ankerrohr mit Außengewinde und ein Ankerkern benötigt. Der Ankerkem kann dabei so ausgebildet sein, daß er zusätzlich zur Befestigung der Magnetspule auf dem Anker verwendet werden kann, beispielsweise kann eine umlaufende Nut in seinem Umfang vorgesehen sein, in welche ein Befestigungsmittel, bspw. eine Klammer, eingreift.

Das erfindungsgemäße Ventil ist bevorzugt als Schieberventil ausgebildet. Dies hat den Vorteil, daß die beim Verschieben des Schieberelementes auf der Sitzfläche mit der Ventilöffnung auftretende Reibung zusätzlich die Bewegung des Ventiles dämpft. Außerdem wird der Schieber bei Einsatz des Ventils in einem Kältekreis als Expansionsventil durch das unter Druck stehende Kältemedium auf die Gegenfläche gepreßt. Dadurch wird einerseits die Reibkraft erhöht und andererseits ein sicheres vollständiges Schließen gewährleistet. Ein weiterer Vorteil gegenüber einem Axialsitzventil besteht darin, daß der Anker beim Schließen des Ventils nicht aufgrund der herrschenden Druckverhältnisse auf den Ventilsitz angesaugt wird. Der Wasserhammereffekt wird dadurch weiter verringert.

Bevorzugt wird für den Schieber und/oder für die Gegenfläche Kunststoff, einschließlich Keramik verwendet. Insbesondere haben sich jeweils Siliziumcarbid und Aluminiumoxid als vorteilhaft herausgestellt, wobei entweder beide Elemente aus demselben Material oder je eines aus einem der beiden Materialien gefertigt sein kann. Mit diesen Materialien können sehr ebene Planflächen erzeugt werden. Außerdem besteht anders als bei Metall keine Korrosionsgefahr. Die Verwendung von Siliziumcarbid und/oder Aluminiumoxid hat gegenüber der Verwendung von Teflon den Vorteil, daß durch die genannten Materialien, anders als bei Teflon, keine eventuell vorhandenen Metallteilchen angesammelt werden. Durch die genannten Materialien kann daher eine bessere innere Dichtigkeit des Ventils erzielt werden. Dies ist insbesondere hinsichtlich der Schließfunktion wichtig, um möglichst geringe Energieverluste zu erreichen.

Bei dem erfindungsgemäßen Ventil wird bevorzugt darauf geachtet, daß der Ringspalt zwischen Ankerrohr und beweglichem Anker nicht zu klein gewählt ist, um einen Gasfedereffekt zu vermeiden. Eine solch starke Dämpfung könnte zu einer Wechselstromvibration des Ventils führen.

Zur Rückstellung eines beweglichen Ankers ist bevorzugt eine Rückstellfeder vorgesehen. Diese ist insbesondere zwischen dem beweglichen Anker und dem Ankerkern vorgesehen und, ebenfalls bevorzugt, beidseits in Sacklöchern aufgenommen. Diese Anordnung und Ausgestaltung vereinfacht die Montage. Durch Verwendung einer Feder geringen Querschnitts und ohne große Knickstabilität kann zudem eine Rotierbarkeit des beweglichen Ankers erreicht werden. Vorteilhafterweise wird die Abnutzung des beweglichen Ankers dadurch verringert. Entsprechend ist es bevorzugt, den Schieber am beweglichen Anker derart abzustützen, daß der bewegliche Anker rotierbar, insbesondere weitgehend frei rotierbar ist. Hierzu kann der bewegliche Anker mit einer Aufnahmenut an seinem Umfang versehen sein, in welcher sich der Schieber, der auf seiner zugewandten Seite hierzu reziprok ausgebildet ist, abstützt. Die Lebensdauer des beweglichen Ankers kann dadurch erhöht werden.

Eine weitere Verbesserung ergibt sich dadurch, daß die Durchtrittsöffnung in der Gegenfläche zum Schieber in Bewegungsrichtung des Schiebers derart ausgebildet ist, daß die Öffnung zunächst nur langsam und dann zunehmend schneller freigegeben wird. Insbesondere kann der Öffnungsquerschnitt in Bewegungsrichtung des Schiebers spitz zulaufend ausgebildet sein, also derart keilförmig, daß zunächst nur eine Keilspitze vom Schieber freigegeben wird. Hierdurch wird ein abrupter Wechsel zwischen völlig geschlossener und geöffneter Durchtrittsöffnung vermieden. Auch hierdurch wird der Wasserhammereffekt weiter verringert.

Eine weitere Verbesserung ergibt sich dadurch, daß zusätzlich zu der Durchtrittsöffnung in der Gegenfläche eine weitere Öffnung mit wählbarem Querschnitt vorgesehen ist. Damit kann über Wahl dieser zweiten Öffnung, die in einem speziellen Einsatz vorgesehen sein kann, die Kapazität des Ventils variiert werden. Dies ist, insbesondere auch in der Lagerhaltung, besonders kostengünstig, da alle übrigen Bestandteile des Ventils für verschiedene Kapazitäten gieich sind.

Besonders bevorzugt ist es, wenn die zusätzliche Durchtrittsöffnung als austauschbare Wechseldüse ausgebildet ist, die insbesondere mit dem Ventilgehäuse verschraubbar ist. Damit kann die Kapazität des Ventils in einfacher Weise durch Austausch der Wechseldüse geändert werden. Bei Anordnung der Wechseldüse hinter der Durchtrittsöffnung der Gegenfläche ist ein Austausch direkt über den Anschlußstutzen möglich, so daß der Austausch ohne Öffnen des Ventils durchgeführt werden kann. Es ist lediglich erforderlich, die Wechseldüse von der Austrittsseite her aus dem Ventilgehäuse auszuschrauben und eine gewünschte andere Düse einzuschrauben.

Ausführungsbeispiele der Erfindung sind in der Zeichnung dargestellt und werden nachfolgend beschrieben. Es zeigen, jeweils in schematischer Darstellung:
- Fig. 1: einen Schnitt durch eine erfindungsgemäße Ventilanordnung,
- Fig. 2: eine Draufsicht auf ein Detail von Fig. 1,
- Fig. 3: eine Variante zu Fig. 2,
- Fig. 4: eine Draufsicht auf ein weiteres Detail von Fig. 1,
- Fig. 5: einen Ausschnitt zu einer Variante von Fig. 1,
- Fig. 6: einen Schnitt gemäß Linie VI-VI in Fig. 5,
- Fig. 7: einen Ausschnitt zu einer weiteren Variante von Fig. 1 und
- Fig. 8: einen Schnitt gemäß Linie VIII-VIII in Fig. 7.

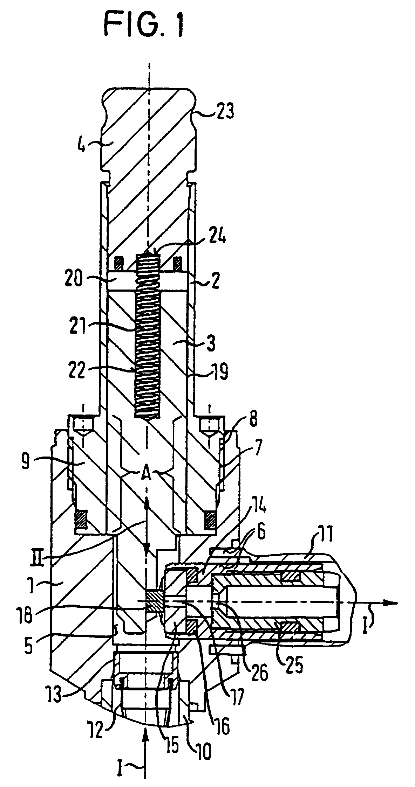

Die in Fig. 1 dargestellte Ventilanordnung umfaßt einen Ventilkörper 1, ein Ankerrohr 2, einen im Ankerrohr hin- und herbeweglichen Anker 3 und einen in ein Ende des Ankerrohrs 2 eingesetzten festen Ankerkern 4. Der Ventilkörper 1 weist eine Durchgangsöffnung 5 und eine in diese mündende Seitenöffnung 6 auf. Die Durchgangsöffnung 5 ist auf einer Seite des Ventilkörpers 1 stufenartig erweitert und mit einem Innengewinde 7 versehen. In das Innengewinde 7 ist ein mit einem Außengewinde 8 versehener erweiterter Abschnitt 9 eingeschraubt, der an dem Ankerrohr 2 angeformt ist.

Das andere Ende der Durchgangsöffnung 5 ist ebenfalls stufenartig erweitert. Auf dieser Seite ist in die Durchgangsöffnung 5 ein Anschlußstück 10 zum Anschließen einer Fluidleitung eingesetzt. Hierbei kann es sich um ein einfaches Rohrstück, insbesondere aus Kupfer, handeln, welches mit einer weiterführenden Leitung verlötbar ist. Es kann sich aber auch um ein Anschlußstück mit Gewinde handeln, an das ein weiterführendes Rohr anschraubbar ist.

In die Seitenöffnung 6 ist ebenfalls ein Anschlußstück 11 zum Anschließen einer weiterführenden Leitung eingesetzt. Auch hier kann es sich entweder um ein einfaches Rohrstück, insbesondere aus Kupfer, oder um ein mit Gewinde versehenes Anschlußstück handeln.

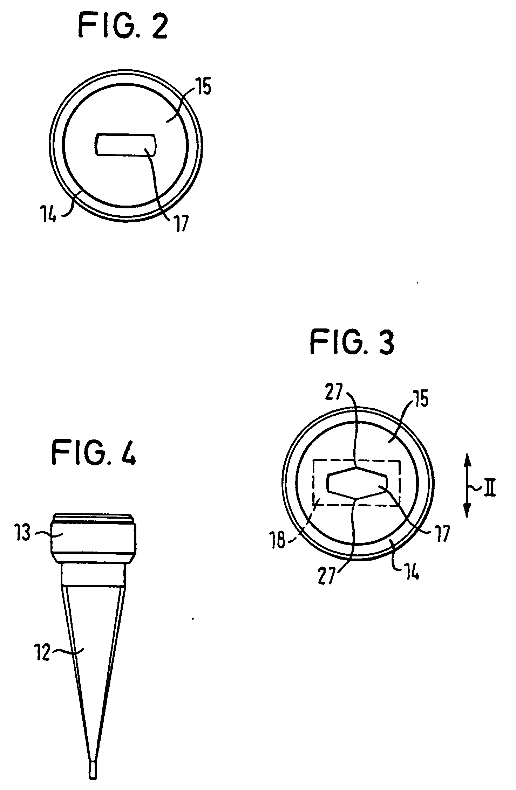

Im Bereich des Anschlußstückes 10, welches insbesondere den Eingang der Ventilanordnung definiert, ist in die Durchgangsöffnung 5 des weiteren ein Sieb 12 mit Haltering 13 eingesetzt. Das in Fig. 4 im einzelnen dargestellte Sieb 12 ist kegelförmig ausgebildet und weist mit seiner Kegelspitze entgegen der Strömungsrichtung I. Hierdurch wird ein Zusetzen des Siebes 12 erschwert.

In das Anschlußstück 11 ist ein rohrförmiger Adapter 14 eingesetzt, der mit seinem vorderen Ende in die Durchgangsöffnung 5 des Ventilkörpers 1 ragt. In dieses vordere Ende des Adapters 14 ist eine Scheibe 15 eingesetzt und über einen O-Ring 16 abgedichtet. Die Scheibe 15 weist eine schlitzförmige Durchtrittsöffnung 17 für das zu steuernde Medium auf.

Die zur Durchtrittsöffnung 5 weisende Seite der Scheibe 15 ist als Gleitfläche für ein Schieberelement 18 ausgebildet, welches vom unteren Ende des beweglichen Ankers 3 getragen ist. Das Schieberelement 18 wird mit dem beweglichen Anker 3 in Richtung des Pfeiles II hin- und herbewegt und arbeitet so mit der Scheibe 15 als Schieberventil zusammen.

Nicht dargestellt ist die Magnetspulenanordnung zur Betätigung der erfindungsgemäßen Ventilanordnung.

Als Material für das Schieberelement 18 kann vorteilhafterweise Siliziumcarbid, für die Scheibe 15 Aluminiumoxid verwendet werden. Die Materialien können aber auch umgekehrt oder jeweils für beide Elemente 15, 18 eingesetzt werden. Grundsätzlich können für die Elemente 15, 18 aber auch andere Materialien verwendet werden.

Der bewegliche Anker 3 und das diesen umgebende Ankerrohr 2 sind in ihren Querschnitten derart ausgebildet, daß zwischen dem beweglichen Anker 3 und dem Ankerrohr 2 ein Ringraum 19 gebildet wird, der einen Durchfluß von Medium zu dem bzw. von dem zwischen dem beweglichen Anker 3 und dem festen Ankerkern 4 gebildeten Raum 20 ermöglicht. In einem Abschnitt A sind der bewegliche Anker 3 und das Ankerrohr 2 dabei in ihren Querschnitten so ausgebildet, daß beim Hin- und Herbewegen des beweglichen Ankers 3 gemäß Pfeil II Medium nur mit einer bestimmten Geschwindigkeit bzw. Durchflußmenge aus dem Raum 20 bzw. in den Raum 20 fließen kann. Der Raum 20 wirkt dadurch als Dämpfungskammer, die die Bewegung des beweglichen Ankers 3 beim Öffnen und Schließen der Ventilanordnung dämpft. Die einander gegenüberliegenden Umfangsabschnitte des Ankerrohres 2 und des beweglichen Ankers 3 sind dabei in dem Bereich A bevorzugt entsprechend oberflächenbehandelt, um die gewünschte Passungsdämpfung sicher zu gewährleisten.

Die Rückstellung des beweglichen Ankers 3 wird durch eine Feder 21 gewährleistet, die in einem Sackloch 22 des beweglichen Ankers 3 und einem gegenüberliegenden Sackloch 24 im festen Ankerkern 4 derart aufgenommen ist, daß der bewegliche Anker 3 vollständig an dem festen Ankerkern 4 anliegen kann. Die Feder 21 ist als lange und dünne Feder mit geringer Knickfestigkeit ausgebildet, um eine Verdrehung des beweglichen Ankers 3 um seine Bewegungsachse II zuzulassen.

In den Adapter 14 ist außerdem eine Wechseldüse 25 eingeschraubt. Die Wechseldüse 25 ist auf ihrer der Durchtrittsöffnung 5 zugewandten Seite mit einer Durchtrittsöffnung 26 versehen, die den Durchflußquerschnitt der Ventilanordnung bestimmt. Durch Austausch der Wechseldüse 25 kann somit auf einfache Weise die Kapazität der Ventilanordnung variiert werden. Wie man sieht, ist die Wechseldüse 25 von der Austrittsseite der Ventilanordnung her direkt zugänglich und kann dadurch ohne Öffnen der Ventilanordnung ausgewechselt werden.

Fig. 2 zeigt eine mögliche Ausgestaltung der Scheibe 15 mit Durchtrittsöffnung 17. Die Durchtrittsöffnung 17 ist hier im wesentlichen rechteckförmig. Bei der in Fig. 3 dargestellten Variante ist die Durchtrittsöffnung 17 dagegen im wesentlichen sechseckförmig mit zwei in Bewegungsrichtung II des beweglichen Ankers 3 weisenden Ecken 27. Wie man erkennt, wird dadurch erreicht, daß das in Fig. 3 strichliert angedeutete Schieberelement 18 die Durchtrittsöffnung 17 langsamer als bei der in Fig. 2 dargestellten Variante, insbesondere nicht abrupt schließt. Vielmehr bleibt am Ende des Schließvorgangs zunächst noch ein kleiner, dreieckiger Öffnungsquerschnitt frei, der sich mit abnehmender Geschwindigkeit verkleinert, bis die Öffnung 17 dann ganz geschlossen ist. Grundsätzlich ist es auch möglich, die Öffnung 17 nur auf einer Seite mit einer Ecke 27 zu versehen. In jedem Falle wird hierdurch der Wasserhammereffekt beim Schließen der Ventilanordnung verringert.

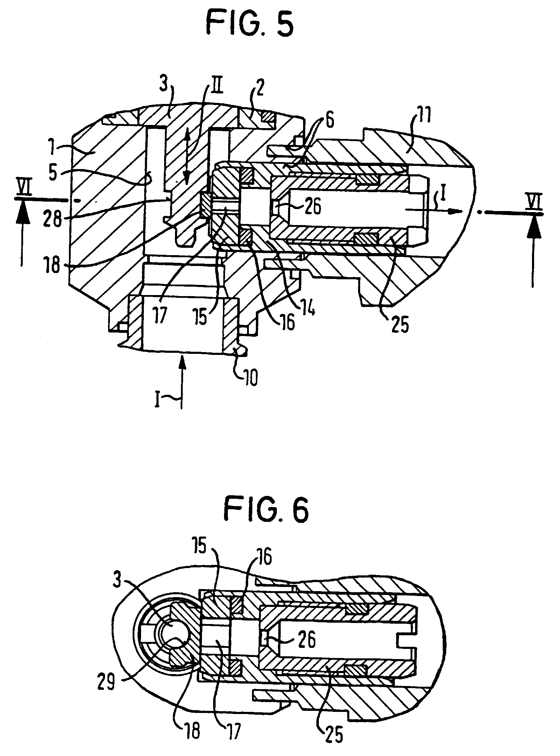

Bei der in den Fig. 5 und 6 dargestellten Variante der erfindungsgemäßen Ventilanordnung weist der bewegliche Anker 3 an seinem unteren Ende eine Ringnut 28 auf, in welche das Schieberelement 18 eingesetzt ist. Das Schieberelement 18 ist hierfür auf seiner dem beweglichen Anker 3 zugewandten Seite mit einer reziprok ausgebildeten, halbkreisförmigen Nut 29 versehen. Diese Ausgestaltung ermöglicht ein Verdrehen des beweglichen Ankers 3 um seine Bewegungsachse II um einen grundsätzlich beliebigen Winkel. Die Abnutzung des beweglichen Ankers 3 sowie des Ankerrohres 2 wird dadurch verringert.

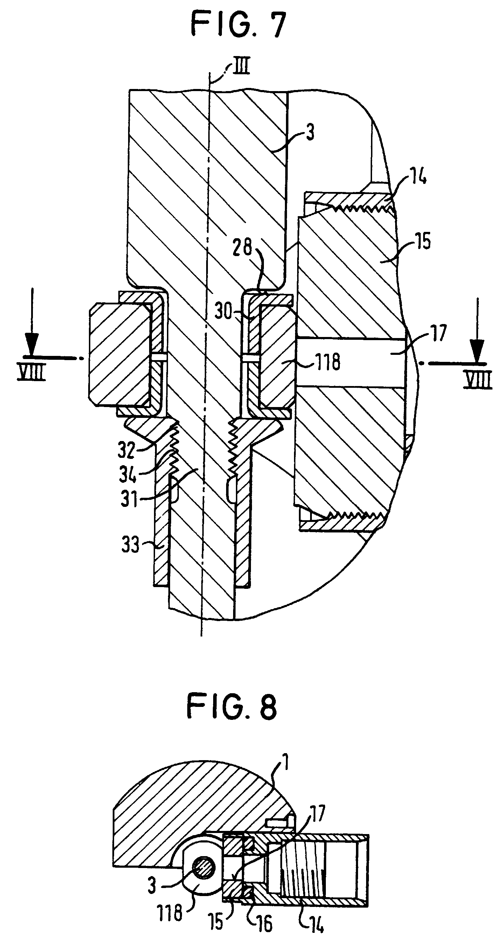

Bei der in den Fig. 7 und 8 dargestellten Variante ist das in die Ringnut 28 des beweglichen Ankers 3 eingesetzte Schieberelement 118 ringförmig ausgebildet. Die der Scheibe 15 mit der Durchtrittsöffnung 17 zugewandte Seite des Schieberelementes 118 ist dabei abgeflacht, um eine geeignete Dichtfläche zu bilden. Aus herstellungstechnischen Gründen ist auch die gegenüberliegende Seite des Schieberelementes 118 abgeflacht, wie man insbesondere in Figur 8 erkennt.

Das Schieberelement 118 ist in die Ringnut 28 des beweglichen Ankers 3 unter Zwischenschaltung eines zweiteiligen Trägers 30 eingesetzt, der im Querschnitt U-förmig ausgebildet ist. Die beiden Teile des bevorzugt aus Polytetrafluorethylen (Teflon) hergestellten Trägers 30 werden bei der Herstellung von beiden Seiten in die zentrale Öffnung des ringförmigen Schieberelementes 118 eingesetzt. Zum Aufbringen des Trägers 30 mit dem Schieberelement 118 auf den beweglichen Anker 3 ist dieser an seinem unteren Ende, wie in Fig. 7 erkennbar, zweiteilig ausgebildet, mit einem verjüngten Abschnitt 31 mit Außengewinde 32 und einer Überwurfmutter 33 mit Innengewinde 34. Über den verjüngten Abschnitt 31 kann der Träger 30 mit dem Schieberelement 118 auf den beweglichen Anker 3 aufgeschoben und anschließend durch die Überwurfmutter 33 in seiner Arbeitsposition fixiert werden. Die Montage ist dadurch einfach möglich.

Die Ausgestaltung des Schieberelementes in der beschriebenen Weise hat den Vorteil, daß der bewegliche Anker 3 um seine Längsachse III nahezu völlig frei rotierbar ist. Auf den beweglichen Anker 3 eventuell wirkende Drehmomente haben daher keinen Einfluß auf das Schieberelement 118, so daß dessen Dichtfunktion und leichte Verschiebbarkeit relativ zur Scheibe 15 und der Durchtrittsöffnung 17 nicht beeinträchtigt wird.

Insgesamt ergibt sich durch die Erfindung eine Ventilanordnung, die einerseits kostengünstig herstellbar ist und andererseits hervorragende Eigenschaften, einschließlich einer hohen Lebensdauer aufweist. Sowohl die innere als auch die äußere Dichtigkeit sind sehr gut. Zudem kann die Kapazität der Ventilanordnung durch Austauschen der Wechseldüse 25 schnell und einfach variiert werden, ohne die Ventilanordnung öffnen zu müssen.

### Bezugszeichenliste

- 1: Ventilkörper
- 2: Ankerrohr
- 3: beweglicher Anker
- 4: fester Ankerkern
- 5: Durchgangsöffnung
- 6: Seitenöffnung
- 7: Innengewinde
- 8: Außengewinde
- 9: Erweiterung von 2
- 10: erstes Anschlußstück
- 11: zweites Anschlußstück
- 12: Sieb
- 13: Haltering
- 14: Adapter
- 15: Scheibe
- 16: O-Ring
- 17: Durchtrittsöffnung
- 18: Schieberelement
- 19: Ringraum
- 20: Dämpfüngskammer
- 21: Feder
- 22: Sackloch
- 23: Nut
- 24: Sackloch
- 25: Wechseldüse
- 26: Durchtrittsöffnung
- 27: Ecke
- 28: Ringnut
- 29: Ausnehmung
- 30: Träger
- 31: Abschnitt von 3
- 32: Außengewinde
- 33: Überwurfmutter
- 34: Innengewinde
- 118: Schieberelement
- I: Strömungsrichtung
- II: Bewegungsrichtung von 3
- III: Längsachse von 3

## Patentansprüche

1. Ventilanordnung, insbesondere als pulsbreitenmoduliertes Expansionsventil einer Kälteanlage mit folgenden Elementen:
einem Ventilkörper (1) mit einer Durchgangsöffnung (5), einem in ein Ende der Durchgangsöffnung (5) eingesetzten Ankerrohr (2), einem in dem Ankerrohr (2) hin- und herbeweglichen Anker (3), einem in das außenliegenden Ende des Ankerrohrs (2) eingesetzten festen Ankerkern (4), einem zwischen beweglichem Anker (3) und festem Ankerkern (4) wirksamen Rückstellelement (22), einem von dem beweglichen Anker (3) getragenen Schließelement (18), welches mit einer Durchtrittsöffnung (17) zum Öffnen und Schließen der Ventilanordnung zusammenwirkt sowie mit einer Magnetspule zur Betätigung der Ventilanordnung, wobei zwischen dem Ankerrohr (2) und dem beweglichen Anker (3) ein Ringraum (19) ausgebildet ist, dessen Öffnungsquerschnitt so bemessen ist, daß der zwischen beweglichem Anker (3) und festem Ankerkern (4) gebildete Raum (20) als Dämpfungskammer wirkt, durch welche die Öffnungs- und Schließbewegung des beweglichen Ankers (3) gedämpft wird.

2. Ventilanordnung nach Anspruch 1,
dadurch gekennzeichnet,
daß das Ankerrohr (2) und/oder der bewegliche Anker (3) nur über einen Bereich (A) ihrer Oberflächen auf Passung gefertigt sind.

3. Ventilanordnung nach Anspruch 1 oder 2,
dadurch gekennzeichnet,
daß an das Ankerrohr (2) Befestigungsmittel, insbesondere ein Außengewinde (8) angeformt sind, durch welche das Ankerrohr (2) mit dem Ventilgehäuse (1) verbindbar ist.

4. Ventilanordnung nach einem der Ansprüche 1 bis 3,
dadurch gekennzeichnet,
daß der Ankerkern (4) zur Befestigung der Magnetspule auf dem Anker (4) ausgebildet ist, insbesondere eine umlaufende Nut (23) aufweist, in welche ein Befestigungsmittel wie eine Klammer eingreifen kann.

5. Ventilanordnung, insbesondere als pulsbreitenmoduliertes Expansionsventil einer Kälteanlage, mit folgenden Elementen:
einem Ventilkörper (1) mit einer Durchgangsöffnung (5), einem in der Durchgangsöffnung (5) angeordneten Ventilsitz (15) mit einer Durchtrittsöffnung (17) für das zu steuernde Medium, und einem im Ventilkörper (1) angeordneten beweglichen Schließelement (18), welches zum Öffnen und Schließen der Ventilanordnung mit dem Ventilsitz (15) zusammenwirkt,
dadurch gekennzeichnet,
daß in der Durchgangsöffnung (5) des Ventilkörpers (1) zusätzlich zu der Durchtrittsöffnung (17) des Ventilsitzes (15) eine weitere Durchtrittsöffnung (26) ausgebildet ist, deren Querschnitt die Kapazität der Ventilanordnung bestimmt.

6. Ventilanordnung nach Anspruch 5,
dadurch gekennzeichnet,
daß die weitere Durchtrittsöffnung (26) in einem Einsatz (25) vorgesehen ist.

7. Ventilanordnung nach Anspruch 6,
dadurch gekennzeichnet,
daß die weitere Durchtrittsöffnung (26) als austauschbare Wechseldüse (25) ausgebildet ist.

8. Ventilanordnung nach Anspruch 7,
dadurch gekennzeichnet,
daß die Wechseldüse (25) mit dem Ventilkörper (1) verschraubbar ausgebildet ist.

9. Ventilanordnung nach Anspruch 7 oder 8,
dadurch gekennzeichnet,
daß die Wechseldüse (25) in Strömungsrichtung (I) hinter dem Ventilsitz (15) angeordnet ist.

10. Ventilanordnung nach einem der vorhergehenden Ansprüche,
dadurch gekennzeichnet,
daß das Ventil als Schieberventil ausgebildet ist.

11. Ventilanordnung nach Anspruch 10,
dadurch gekennzeichnet,
daß als Material für den Schieber und/oder die Gegenfläche Kunststoff oder Keramik, insbesondere Siliciumcarbid und Aluminiumoxid, vorgesehen ist.

12. Ventilanordnung nach Anspruch 10 oder 11,
dadurch gekennzeichnet,
daß der bewegliche Anker (3) um seine Längsachse (III) rotierbar ist.

13. Ventilanordnung nach Anspruch 12,
dadurch gekennzeichnet,
daß das Schieberelement (118) ringförmig ausgebildet ist und in einer ringförmigen Nut (28) des beweglichen Ankers (3), insbesondere unter Zwischenschaltung eines Trägers (30) aus Gleitlagermaterial, gelagert ist.

14. Ventilanordnung nach einem der Ansprüche 10 bis 13,
dadurch gekennzeichnet,
daß die Durchtrittsöffnung (17) in der Gegenfläche (15) zum Schieberelement (18) in Bewegungsrichtung des Schieberelements (18) derart ausgebildet ist, daß die Öffnung (17) zunächst nur langsam und dann zunehmend schneller freigegeben wird.

15. Ventilanordnung nach Anspruch 14,
dadurch gekennzeichnet,
daß sich der Öffnungsquerschnitt in Bewegungsrichtung verjüngt, insbesondere keilförmig ausgebildet ist.

16. Ventilanordnung nach einem der vorgehenden Ansprüche,
dadurch gekennzeichnet,
daß zur Rückstellung des beweglichen Ankers (3) eine Rückstellfeder (21) vorgesehen ist, die insbesondere beidseits in Sacklöchern (22, 24) aufgenommen ist.

17. Ventilanordnung nach Anspruch 16,
dadurch gekennzeichnet,
daß die Rückstellfeder (21) eine geringe Knickstabilität und bevorzugt einen geringen Durchmesser aufweist.
